(19) Europäisches Patentamt / European Patent Office / Office européen des brevets

(11) **EP 1 921 424 B1**

(12) **EUROPEAN PATENT SPECIFICATION**

(45) Date of publication and mention of the grant of the patent:
**23.03.2016 Bulletin 2016/12**

(21) Application number: **06782523.2**

(22) Date of filing: **09.08.2006**

(51) Int Cl.:
*G01F 1/66* (2006.01)

(86) International application number:
**PCT/JP2006/315707**

(87) International publication number:
**WO 2007/020843 (22.02.2007 Gazette 2007/08)**

(54) **FLOW MEASURING INSTRUMENT OF FLUID**

GERÄT ZUM MESSEN DES DURCHFLUSSES EINER FLÜSSIGKEIT

INSTRUMENT DE MESURE DE DÉBIT DE FLUIDE

(84) Designated Contracting States:
**DE GB TR**

(30) Priority: **16.08.2005 JP 2005235734**

(43) Date of publication of application:
**14.05.2008 Bulletin 2008/20**

(73) Proprietor: **Panasonic Corporation**
**Kadoma-shi**
**Osaka 571-8501 (JP)**

(72) Inventors:
• **TAKEMURA, Koichi c/o Matsushita Elec. Indu Co., Ltd**
**Shiromi, Chuo-ku, Osaka-shi, Osaka 540-6207 (JP)**
• **BESSYO, Daisuke c/o Matsushita Elec. Indu Co., Ltd**
**Shiromi, Chuo-ku, Osaka-shi, Osaka 540-6207 (JP)**

• **SHIBA, Fumikazu c/o Matsushita Elec. Indu Co., Ltd**
**Shiromi, Chuo-ku, Osaka-shi, Osaka 540-6207 (JP)**
• **NAKABAYASHI, Yuji c/o Matsushita Elec. Indu Co., Ltd**
**Shiromi, Chuo-ku, Osaka-shi, Osaka 540-6207 (JP)**

(74) Representative: **Pautex Schneider, Nicole Véronique et al**
**Novagraaf International SA**
**Chemin de l'Echo 3**
**1213 Onex (CH)**

(56) References cited:
JP-A- 9 304 139          JP-A- 09 133 562
JP-A- 09 304 139         JP-A- 2001 289 681
JP-A- 2002 310 752       JP-A- 2002 350 202
JP-A- 2003 315 124       US-A- 5 178 018
US-A1- 2004 261 539

**Description**

**TECHNICAL FIELD**

The present invention relates to a flow measuring instrument of fluid, which instrument measures the velocity or the volume of the flowing fluid based on a travel time of an ultrasonic signal.

**BACKGROUND ART**

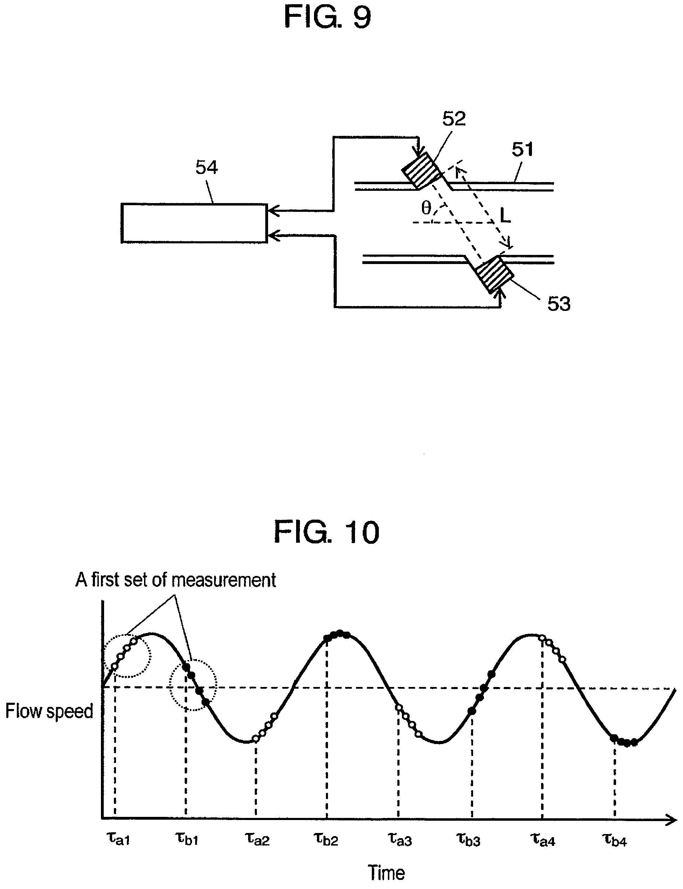

A conventional flow measuring instrument employs the sing-around method that enhances measuring resolution by means of repeating the transmission and reception between a pair of oscillators multiple times. Fig. 9 shows the conventional flow measuring instrument of fluid, which instrument employs the sing-around method. The instrument is formed of first oscillator 52 for transmitting an ultrasonic wave, second oscillator 53 for receiving the ultrasonic wave transmitted, both of oscillators 52 and 53 are disposed at fluid duct 51, and measurement control section 54 for measuring a travel time of the ultrasonic wave between oscillators 52 and 53.

Assume that acoustic velocity is "C", flow velocity is "v", distance between the pair of oscillators is "L", and travel direction of the ultrasonic wave forms angle $\theta$ with respect to the flow direction. Assume also the travel time of an ultrasonic wave transmitted from the oscillator placed on the upstream side of the duct to the other oscillator placed on the downstream side is "ta" and the travel time in the opposing direction is "tb". Then the travel times "ta" and "tb" can be written as the following equations:

$$ta = L/(C + v \times \cos\theta), \quad \text{and} \quad tb = L/(C - v \times \cos\theta)$$

Velocity "v" can be found from the equations discussed above;

$$v = L \times (1/ta - 1/tb) / 2\cos\theta.$$

The velocity "v" thus found is multiplied by sectional area "S" of the duct and correction coefficient "K", whereby an instant flow volume "Q" of the fluid can be found, namely, Q = v x S x K.

The difference between "ta" and "tb" is so few at small velocity "v" that a precise measurement of the difference is difficult. A number of measuring should be thus carried out, and the results are averaged in order to obtain a result with a relatively small error, which also enhances the resolution.

To be more specific, repeat the travel of ultrasonic wave from the upstream side to the downstream side "n" times, and assume that the travels in "n" times take time "Ta" in total, then repeat also "n" times of the travel of the ultrasonic wave in the opposing direction, and this repeat takes time "Tb" in total. Times "Ta" and "Tb" thus obtained are divided by "n" respectively, whereby respective travel times "ta" and "tb" per travel can be found. The respective travel times "ta" and "tb" thus averaged are substituted into the equation of finding the instant flow volume "Q", whereby a precise flow volume can be obtained.

Such repeated measurements are done intermittently at a regular interval "$\tau$" e.g. two seconds, and instant flow volume "Q" is multiplied by this intermittent interval "$\tau$", whereby the fluid volume passed through duct 51 in intermittent interval "$\tau$" can be obtained. This result is integrated, thereby finding an integrated value of the fluid flow volume.

However, if the flow has cyclic changes, the measuring method discussed above encounters a problem that the flow velocity always changes during intermittent interval "$\tau$", so that the measuring results have errors depending on a varying waveform phase at which the measurement is carried out.

To overcome this problem, unexamined Japanese Patent Publication No. 2003 - 28685 discloses the method for finding a precise flow volume through capturing all around the respective phases of the varying waveform and obtaining an average flow velocity. Fig. 10 shows a timing chart illustrating this method, and the timing chart shows a relation between changes in a flow speed and timings of measuring. At time "$\tau_{a1}$", the travel time is measured four times between first oscillator 52 (transmitter) placed on the upstream side and second oscillator 53 (receiver) placed on the downstream side, then measurement control section 54 switches over the role of first oscillator 52 to that of second oscillator 53 and vice versa, and at time "$\tau_{b1}$", the travel time is measured four times.

The foregoing travel-time measurements in both directions are referred to as a first set of measurement, and similar measurements are done in a given number of sets. To be more specific, in Fig. 10 at time "$\tau_{a2}$", first oscillator 52 works as the transmitter and second oscillator works as the receiver for the measurements, and at time "$\tau_{b2}$", first oscillator 52 works as the receiver and second oscillator works as the transmitter for the measurements. These measurements are referred to as a second set of measurement.

The measurements of travel time in both directions are carried out "m" sets ("m" is an integer). Measurement control section 4 then finds total travel times "Ta" at time "$\tau_{am}$", measured on the upstream transmitter, and total travel times "Tb" at time "$\tau_{bm}$", measured on the downstream transmitter. "Ta" and "Tb" are divided by the number of measurements ($4 \times m$) for finding averaged "ta" and "tb" per measurement. Then an average value of flow volume of the fluid is found, and the series of these measurements are carried out intermittently at a regular interval, whereby the integrated flow volume can be obtained.

In these measurements, a proper setting of an interval between the respective sets of measurement, and a proper setting of the number of measurement sets allow capturing all around the respective phases of the varying waveforms of the flow velocity, so that a precise flow volume is obtainable.

Other flow meters are known from US, 5,178,018 A, US 2004/02615 39 A1 and JPH09304139.

However, in the conventional structure, during the series of measurements, which include a given number of measurement sets, a sampling is carried out within a short time, e.g. several milliseconds, and results of respective samplings should be integrated. It is thus necessary for keep supplying power to the electronic circuit of the measurement control section in order to control the interval between the measurements, control the number of measurement sets, and store the integrated value. The electronic circuit thus consumes greater power, and for instance, a gas meter installed outside, in particular, needs a battery having a large capacity.

## DISCLOSURE OF THE INVENTION

A flow measuring instrument of fluid of the present invention comprises the elements as defined in claim 1.

## BRIEF DESCRIPTION OF THE DRAWINGS

Fig. 1 shows a block diagram of a flow measuring instrument of fluid in accordance with a first embodiment of the present invention.

Fig. 2 shows a timing chart illustrating an operation of a measurement control section of the flow measuring instrument of fluid in accordance with the first embodiment of the present invention.

Fig. 3 shows another timing chart illustrating an operation of the measurement control section of the flow measuring instrument of fluid in accordance with the first embodiment of the present invention.

Fig. 4 shows a timing chart illustrating an operation of a time measuring section of the flow measuring instrument of fluid in accordance with the first embodiment of the present invention.

Fig. 5 shows a timing chart illustrating a method of verifying a high rate clock of the flow measuring instrument of fluid in accordance with the first embodiment of the present invention.

Fig. 6 shows a timing chart illustrating a method of verifying an auxiliary clock of the flow measuring instrument of fluid in accordance with the first embodiment of the present invention.

Fig. 7 shows a block diagram of a flow measuring instrument of fluid in accordance with a second embodiment of the present invention.

Fig. 8 shows a block diagram of a flow measuring instrument of fluid in accordance with a third embodiment of the present invention.

Fig. 9 shows a block diagram of a conventional flow measuring instrument of fluid.

Fig. 10 shows a timing chart illustrating an operation of the conventional flow measuring instrument of fluid.

## DESCRIPTION OF REFERENCE MARKS

| 1 | fluid duct |
| 2 | first oscillator |
| 3 | second oscillator |
| 4 | measurement control section |
| 11 | time measuring section |
| 12 | verification section |
| 13 | correction section |
| 14 | calculation section |
| 15 | quartz oscillation circuit |

16    ceramic oscillation circuit
18    clock control section
19    ring oscillator
21    notice section
23    shut-off valve

## DESCRIPTION OF PREFERRED EMBODIMENTS

Exemplary embodiments of the present invention are demonstrated hereinafter with reference to the accompanying drawings.

### Embodiment 1

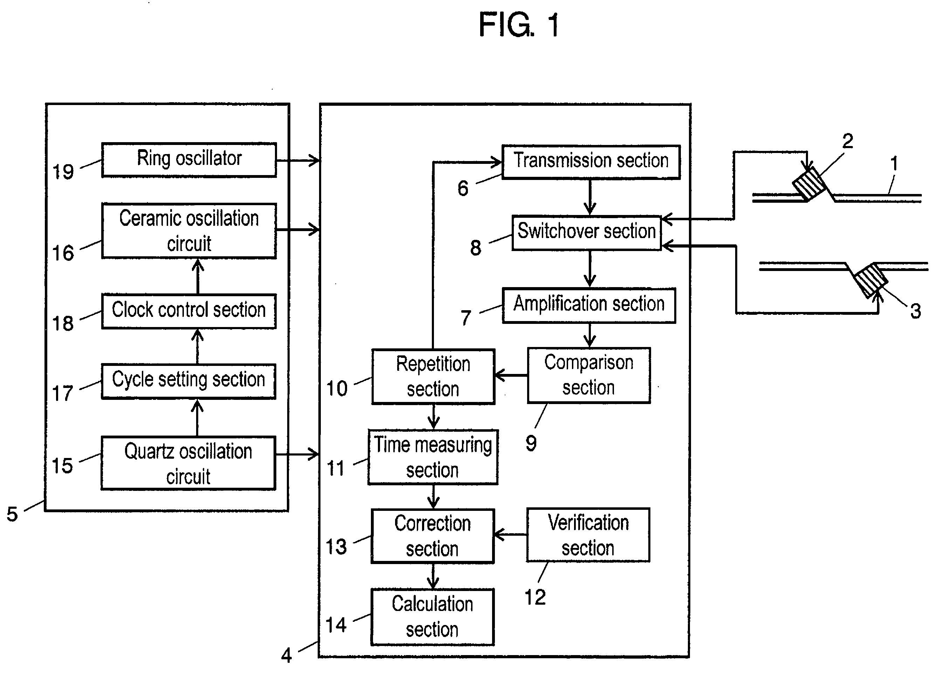

Fig. 1 shows a block diagram of a flow measuring instrument of fluid in accordance with the first embodiment of the present invention. A conventional flow measuring instrument of fluid, which measures a flow volume and the like by using a travel time of an ultrasonic wave, places a measuring section in a fluid flow, and measures a flow velocity of the fluid flowing through this measuring section based on a travel time of ultrasonic wave between ultrasonic-wave oscillators. A flow volume can be found through multiplying the measured flow velocity by a sectional area of a flow path of the measuring section and a given correction coefficient.

The most important factor for achieving a precise measurement of a flow volume and the like is a state of the fluid at the measuring section discussed above. In other words, a disturbance in the fluid at the measuring section will generate a disturbance in traveling of an ultrasonic wave, so that a precise measuring becomes difficult.

To overcome this problem, a sectional view of the measuring section is formed into a rectangle, and the shorter sides of the rectangle are divided by partitions so that a plurality of split and flat flow-paths are formed in parallel with the longer side. These split and flat flow-paths are effective for forming the fluid flow into laminar flows, i.e. two-dimensional and stable flows.

In Fig. 1, first oscillator 2 is placed on the upstream side of the flow in the midway of fluid duct 1 for transmitting an ultrasonic wave, and second oscillator 3 is placed on the downstream side of the flow for receiving the ultrasonic wave transmitted from first oscillator 2. Both the oscillators are angularly placed with respect to the flow and confront each other.

The foregoing angular placement of first and second oscillators 2, 3 with respect the flow is called "Z path" pattern, and this first embodiment describes the present invention based on the Z path; however, the present invention is not limited to this Z path. For instance, a pair of oscillators is placed on the same wall of the measuring section, and an ultrasonic wave is reflected once (V path) or twice (W path) from the confronting wall of the flow path so that the travel time of the ultrasonic wave can be measured. Here is another method; a pair of oscillators is placed non-angularly with respect to the flow, i.e. the ultrasonic wave is transmitted and received substantially in parallel with the flow (I path).

Measurement control section 4 includes an electronic circuit that has control over a transmission of the ultrasonic signal between first oscillator 2 and second oscillator 3, and is formed of a digital circuit and an analog circuit. Sync setting section 5 controls the process timing of measurement control section 4, which includes the following elements: transmission section 6 for outputting a transmission signal to first oscillator 2, amplification section 7 for amplifying a reception signal received by second oscillator 3, and switchover section 8 for switching the roles of transmission and reception between first oscillator 2 and second oscillator 3. First oscillator 2 is coupled to second oscillator 3 via switchover section 8.

Transmission section 6 prompts first oscillator 2 to output an ultrasonic signal to second oscillator 3, and the signal is amplified by amplification section 7, then the signal is compared with a reference signal by comparison section 9. An arrival of the reception wave is determined when the signal agrees with the reference signal.

Then repetition section 10 repeats the foregoing series of steps, starting from an output of the transmission signal by transmission section 6 and ending at a detection of the reception wave by comparison section 9, in a predetermined number of times, and a time needed for the repetition is measured by time measuring section 11.

Verification section 12 finds a precise oscillating cycle of a plurality of clocks available in sync setting section 5. Correction section 13 finds a precise travel time based on both of the travel time obtained by time measuring section 11 and the clock oscillating cycle obtained by verification section 12. Use of the precise travel time allows calculation section 14 to find a fluid velocity, and a flow volume if necessary.

Sync setting section 5 includes the following elements: a low rate clock generator formed of quartz oscillation circuit 15 for supplying a sync clock excellent in time accuracy to measurement control section 4, and a high rate clock generator formed of ceramic oscillation circuit 16. Quartz oscillation circuit 15 works constantly for time control over entire measurement control section 4.

Cycle setting section 17 controls intervals between respective process times of a series of measuring steps carried out by repetition section 10, and in a given time, clock control section 18 outputs a boot signal so that ceramic oscillation circuit 16 starts working. Further, after the clock signal generated by ceramic oscillation circuit 16 becomes stable, clock control section 18 starts supplying the high rate clock as a sync clock to measurement control section 4, which carries out the foregoing series of measuring steps based on the sync clock. An auxiliary clock generator is formed of ring oscillator 19, and is used for achieving a time accuracy shorter than the one cycle of the high rate clock.

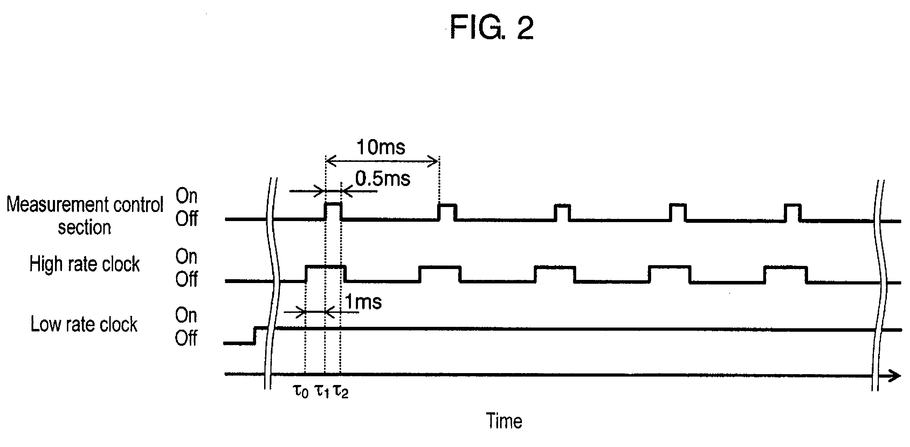

Fig. 2 shows a relation between measurement control section 4 and sync setting section 5. Measurement control section 4 follows up changes in pressure, so that it works at a short interval, e.g. every 10 ms as shown in Fig. 2, for measuring a flow velocity. A time needed for measurement control section 4 to measure is extremely shorter than the measurement interval, such as 0.5 ms as shown in Fig. 2. The works of measurement control section 4, such as measuring a time by time measuring section 11 and shaping the waveform of a transmission signal by transmission section 6, needs an accuracy of time such as nanosecond order, so that a digital circuit for achieving these works needs to be supplied a rather higher rate clock, e.g. 10 MHz.

During a pause after the series of measuring steps, no elaborate control is needed except forming the precise time interval. Thus as shown in Fig. 2, before measurement control section 4 starts measuring, clock control section 18 prompts ceramic oscillation circuit 16 to work at time $\tau_0$, and after circuit 16 becomes stable, e.g. in 1 (one) ms, namely at time $\tau_1$, measurement control section 4 starts working in synchronism with a sync clock signal supplied from ceramic oscillation circuit 16.

After the series of steps is finished, clock control section 18 stops the work of the ceramic oscillation circuit at time $\tau_2$, so that the supply of the high rate clock is halted. Quartz oscillation circuit 15 is formed of clocks of extremely lower rate than the clocks of ceramic oscillation circuit 16, e.g. 32.768 KHz used in an oscillation circuit of an electronic clock, and works constantly for time control over the processes of the whole instrument.

To be more specific, after measurement control section 4 finishes its work, a pause interval or a standby time between a boot of ceramic oscillation circuit 16 and a start of an actual measurement done by measurement control section 4, is controlled based on a low rate sync clock supplied from quartz oscillation circuit 15.

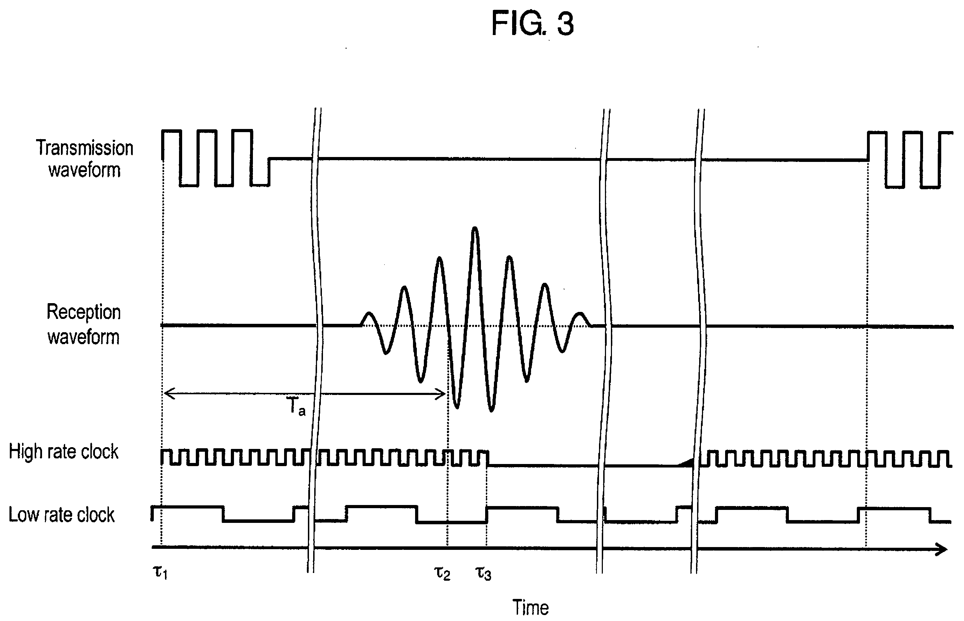

Fig. 3 shows a timing chart of an operational relation between measurement control section 4 and a sync clock, and this timing chart tells the operation of ceramic oscillation circuit 16 more in detail. Based on a high rate clock supplied from ceramic oscillation circuit 16 at time $\tau_1$, transmission section 6 applies a rectangular voltage to first oscillator 2. At the same time, time measuring section 11 starts measuring the travel time taking the rising edge as a count clock. Repetition section 10 repeats the transmission and reception in a given number of times, and comparison section 9 senses the last reception wave at time $\tau_2$. Time measuring section 11 thus measures time Ta needed from time $\tau_1$ to time $\tau_2$.

When the time measurement is completed, post processes such as storing and transmitting the measurement result are done, then clock control section 18 stops the operation of ceramic oscillation circuit 16 at time $\tau_3$. The halting time of ceramic oscillation circuit 16 and a start time of applying the rectangular voltage by transmission section 6 are controlled based on a low rate clock supplied from quartz oscillation circuit 15.

As discussed above, clock control section 18 stops the high rate clocks supplied from ceramic oscillation circuit 16 when time measuring section 11 completes the time measuring operation. The power consumption involved in the series of measuring steps is thus reduced, so that a power-saved measuring can be achieved while cyclic changes in the flow volume can be followed up.

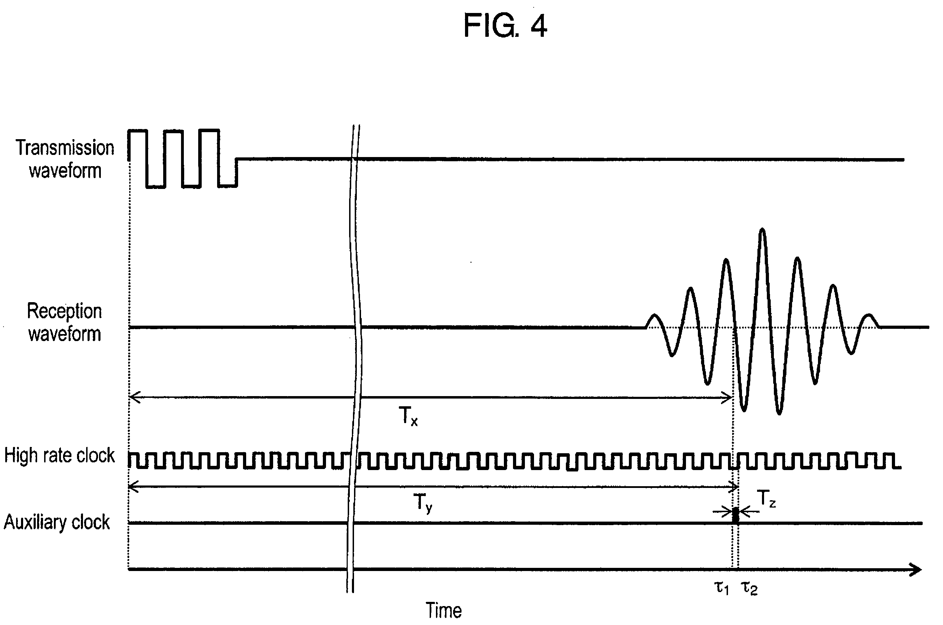

Next, a method of measuring a travel time by time measuring section 11 is demonstrated hereinafter with reference to Fig. 4. An arrival time of a reception wave can be measured with a high rate clock of 10 MHz, and its time resolution is 100 nanoseconds (ns). As already described in the conventional measuring instrument, some compact flow measuring instrument needs a time accuracy of several ns or several hundreds ps (picosecond). In order to satisfy such a requirement, a higher rate clock or a more numbers of sing-around is needed, so that greater power consumption is inevitably expected.

The flow measuring instrument of fluid in accordance with the first embodiment thus includes an auxiliary clock generator which generates a clock having a higher rate than the high rate clock, and ring oscillator 19 as the auxiliary clock generator supplies auxiliary clocks at a part of the measuring operation of time measuring section 11. As a result, time measuring section 11 can find the travel time by using both of high rate clocks and auxiliary clocks. To be more specific, as shown in Fig. 4, the clock higher than the high rate clock works in an extremely short time at a part of the operation, thereby achieving a higher accuracy In other words, the auxiliary clock (e.g. 100 MHz) works at sensing point $\tau_1$ of the reception wave, and the travel time is measured by both the high rate clock and the auxiliary clock until rising edge point $\tau_2$ of the next high rate clock. Assume that the high rate clock finds time "Ty" and the auxiliary clock finds time "Tz", then precise travel time "Tx" can be written as Tx = Ty - Tz. The auxiliary clocks are thus supplied at a part, i.e. during the time span "Tz", of the time measuring operation done by time measuring section 11. Time measuring section 11 thus can find the travel time by using both of the high rate clocks and the auxiliary clocks.

Use of this method assures the time resolution of time measuring section 11 with the auxiliary clock, so that a frequency of the high rate clock can be determined based on a time accuracy needed for timings of other processes such as an output of the rectangular wave from transmission section 6. The oscillating frequency of the high rate clock is thus not needed to increase more than necessary, and the auxiliary clock works only in an extremely short time span, so that little increase in the power consumption is expected. As a result, an appropriate relation between the high rate clock and the auxiliary clock will further decrease the power consumption.

An ultrasonic auxiliary clock can be a noise source; however, in the foregoing structure, since the auxiliary clock works after sensing point $\tau_1$ of the reception wave, extra noises are not superimposed on the reception wave. The time accuracy is thus not lowered by the noise.

Operations of verification section 12 and correction section 13 are demonstrated hereinafter. Considering an electric current consumption, the high rate clock generator has an advantage in using a clock having a shorter rise time, so that the generator employs a ceramic oscillator in order to take this advantage. However, the time accuracy of the ceramic oscillator is as much as 0.1 - 1% which is inferior to that of the quartz oscillator, i.e. several tens of ppm.

Assume that there is 1% time error, an error in a flow volume becomes 1% as discussed in the conventional instrument. In other words, an error equal to the time error of the oscillator is generated, and the error also includes other error factors, so that the accuracy is further lowered.

In the case where a measurement specification of a measuring instrument requires en error rate as accurate as less than 1%, direct use of the clocks supplied from ceramic oscillation circuit 16 will produce a problem in accuracy. Verification section 12 thus finds a precise oscillating cycle of the high rate clock based on the oscillating cycle ratio of the low rate clock vs. the high rate clock. The foregoing low rate clock is supplied from quartz oscillation circuit 15, which is used as the low rate clock generator, and has a relative time accuracy higher than the high rate clock. Correction section 13 can then find a precise travel time based on the oscillating cycle of the high rate clock, which has been found by verification section 12.

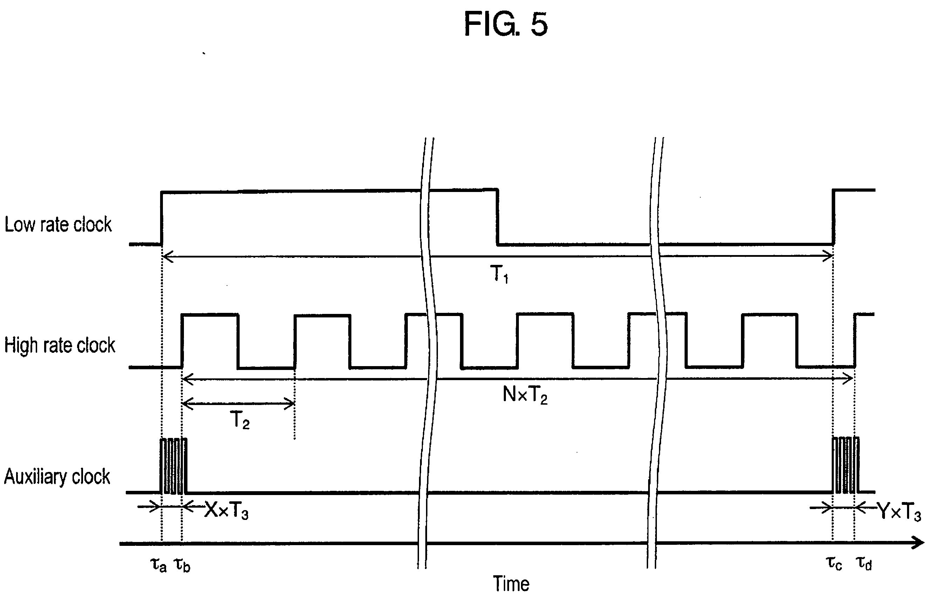

The method discussed above is demonstrated more specifically with reference to Fig. 5. As shown in Fig. 5, assume that the cycles of low rate clock, high rate clock, and auxiliary clock are referred to as $T_1$, $T_2$ and $T_3$ respectively. Verifying operation starts at a rising time $\tau_a$ of the low rate clock, and at the same time, the auxiliary clock used in measuring the travel time is booted, then a time until a rise of the next high rate clock is input (time $\tau_b$) is counted with the auxiliary clocks. Assume the counted value is X, then the counted time-span from $\tau_a$ to $\tau_b$ is written as $X \times T_3$.

The auxiliary clock is booted again at time $\tau_c$ when a rising edge of the low rate clock is inputted, and a time-span until a rising edge of the high rate clock is inputted (time $\tau_d$) is counted with the auxiliary clocks. Assume the counted value is Y, then the counted time-span from $\tau c$ to $\tau d$ is written as $Y \times T_3$.

On the other hand, a time-span from $\tau_b$ to $\tau_d$ is counted, in parallel with the foregoing operation, by the high rate clocks. Assume the counted value is N, then the time-span counted from $\tau_b$ to $\tau_d$ is written as $N \times T_2$. As Fig. 3 tells, $T_1 = X \times T_3 + N \times T_2 - Y \times T_3$, so that $T1 = N \times T_2 + (X - Y) \times T_3$ is established.

Since $T_1$ is a cycle of a highly accurate low rate clock, $T_1$ can be determined as a known value. If the ratio of $T_2$ vs. Ts is known value M, the relational expression between $T_1$ and $T_2$ is written as $T_2 = T_1/\{N + (X - Y)/M\}$. The relational expression between $T_2$ and $T_3$ is described later.

Since $T_1$ is a highly accurate value, $T_2$ can be also considered as a highly accurate and reliable value. As discussed above, the auxiliary clock generator supplies auxiliary clocks at only a part of verifying operation done by verification section 12, i.e. a time span from $\tau_a$ to $\tau_b$ and a time span from $\tau_b$ to $\tau_d$. Verification section 12 finds an oscillation cycle of the high rate clock based on the oscillation cycles of both the low rate clock and the auxiliary clock having a higher rate than the high rate clock, so that the oscillation cycle of the high rate clock can be found more accurately. As a result, the measuring accuracy can be further improved.

In this embodiment, the auxiliary clock is used in the verifying operation done by verification section 12; however, if a frequency ratio of the high rate clock vs. the low rate clock is great enough, e.g. over 1000 times, a verified value accurate enough is obtainable without using the auxiliary clock.

When an auxiliary clock is employed in the verifying operation, use of the same auxiliary clock as used in the time measuring operation of time measuring section 11 allows simplifying the circuit structure. When an auxiliary clock is employed in the verifying operation, a known frequency, as discussed previously, should be used as a frequency of the auxiliary clock. Since the auxiliary clock is generated by ring oscillator 19, dispersion in semiconductor process affects and generates dispersion between individual units, which should undergo the verification and also calibration based on the verification result, then the more accurate measurement of the travel time is obtainable.

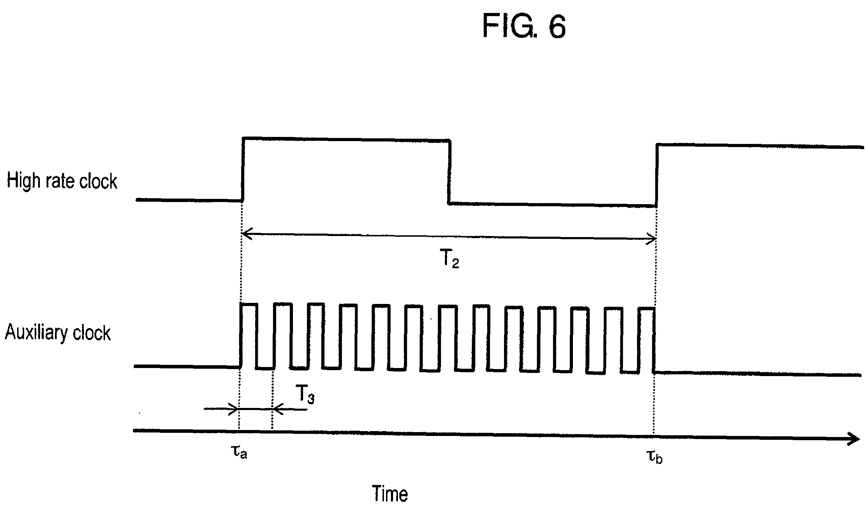

The specific method is demonstrated hereinafter with reference to Fig. 6. The auxiliary clock is verified by using the high rate clock, namely, the auxiliary clock is booted at the same time when the high rate clock rises at time $\tau_a$, then the auxiliary clock is stopped at time $\tau_b$ when the next high rate clock rises. The number of auxiliary clocks counted in the foregoing time span tells the ratio of $T_2$ vs. $T_3$.

Although the foregoing method does not tell the value of $T_3$ directly, substitution of ratio M (the ratio of $T_1$ vs. $T_2$) into the relational expression between $T_1$ and $T_2$, i.e. $T_2 = T_1/\{N + (X - Y)/M\}$, allows calibrating the value of $T_2$. If the value of $T_2$ can be found, $T_3$ can be also found at the same time by using the ratio M. Meanwhile, $T_2$ is used for verifying $T_3$; however, since $T_2$ is a cycle of the high rate clock, the verification can be done in an extremely short time, and this verification thus does not consume extra power. The auxiliary clock can be calibrated by using the low rate clock also. In this case, a precise frequency of the auxiliary clock can be found directly.

Verifying operation by verification section 12 can be carried out in parallel with the measuring operation done by measurement control section 4, to be more specific, the verifying operation is carried out at any time between time $\tau_1$ when transmission section 6 starts applying a rectangular voltage to first oscillator 2 and time $\tau_2$ when comparison section 9 senses a reception wave. Then it is not needed to re-boot the high rate clock or the auxiliary clock for carrying out the verifying operation alone, so that the power saving effect can be further enhanced.

When the verification section finds a cycle of the high rate clock, and the cycle deviates from a given proper range (e.g. between - 2% and +2%) due to external disturbance such as noises, a predetermined standard value is used as a verified value, and this value is determined as an oscillating cycle of the high rate clock for finding the travel time. This preparation allows carrying out the measuring operation even if the verifying operation encounters a one-time abnormality, and thus a reliable flow measuring operation free from being affected by noises is achievable.

When the verification section finds a cycle of the auxiliary clock, and the cycle deviates from a given proper range, a predetermined standard value is used as a verified value, and this value is determined as an oscillating cycle of the auxiliary clock for finding the travel time. This preparation also allows carrying out the measuring operation even if the verifying operation encounters a one-time abnormality, and thus a reliable flow measuring operation free from being affected by noises is achievable.

The flow measuring instrument of fluid in accordance with this first embodiment employs the ceramic oscillation circuit, featuring a high speed rising, as the high rate clock generator, which can be also formed of either one of a CR oscillation circuit or an LC oscillation circuit, both of which rise at a high speed.

Embodiment 2

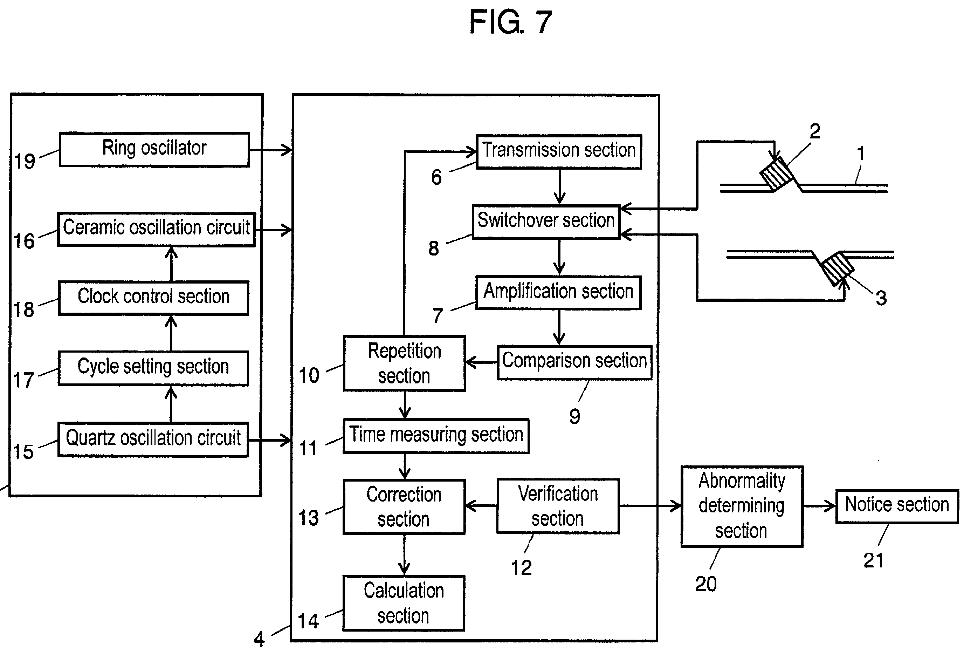

Fig. 7 shows a block diagram of a flow measuring instrument of fluid in accordance with the second embodiment of the present invention. An essential part of Fig. 7 is the same as Fig. 1, so that the detailed descriptions thereof are omitted, and only different parts are described hereinafter.

In Fig. 7, abnormality determining section 20 determines whether or not a result verified by verification section 12 is abnormal, and notice section 21 notifies the outside via a communication line of an abnormality sensed by abnormality determining section 20.

Abnormality determining section 20 determines an abnormality in the following cases: an oscillation cycle of the high rate clock, or an oscillation cycle of the auxiliary clock, both of the oscillation cycles found by verification section 12, deviates from a proper range in series due to an external disturbance such as noises, as discussed in the first embodiment.

This structure allows notifying a user of an abnormality in the measuring operation, and taking measures for the abnormality, so that maintainability can be improved. Notice section 21 is not limited to the use of the communication line, and for instance, it can use audio and video for notifying the users around the instrument of an abnormality.

Embodiment 3

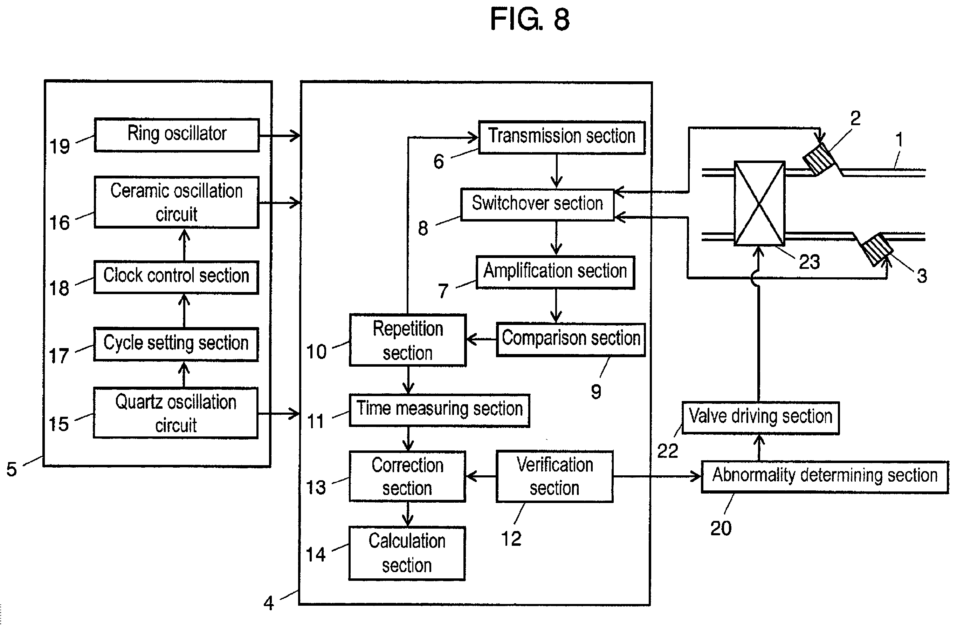

Fig. 8 shows a block diagram of a flow measuring instrument of fluid in accordance with the third embodiment of the present invention. An essential part of Fig. 8 is the same as Fig. 1 and Fig. 7, so that the detailed descriptions thereof are omitted, and only different parts are described hereinafter.

Fig. 8 illustrates that the measuring instrument is applied to a gas meter that determines a gas-use situation based on a flow measurement result, and the gas meter includes a safety function that can shut off the gas flow if an abnormality is sensed. When abnormality determining section 20 determines that a verification result obtained by verification section 12 is abnormal, valve driving section 22 drives shut-off valve 23 for shutting off the fluid flow. The content of abnormality determined by abnormality determining section 20 is the same as described in the second embodiment. This structure allows shutting off the gas flow, lest the users should miss a gas accident because of an abnormality of measuring the gas flow.

INDUSTRIAL APPLICABILITY

A flow measuring instrument of fluid of the present invention decreases power consumption involved in a series of measuring steps, whereby a power-saved measurement is achievable while cyclic changes in flow volume can be followed up. The instrument can be applied to, e.g. a gas meter.

**Claims**

1. A flow measuring instrument of fluid, the instrument comprising

   a first oscillator (2) disposed at a fluid duct (1) for transmitting an ultrasonic signal;
   a second oscillator (3) for receiving the ultrasonic signal transmitted from the first oscillator;
   a time measuring section (11) for finding a travel time of an ultrasonic wave by carrying out one travel or a plurality of travels in series of the ultrasonic wave between the first and the second oscillators (2, 3);
   a calculation section (14) for finding a flow velocity or a flow volume based on the travel time measured by the time measuring section (11);
   a high rate clock generator (16) working at a high frequency;
   a low rate clock generator (15) working at a low frequency;
   a clock control section (18) for controlling an operation of a high rate clock;
   a measurement control section (4), working based on a high rate clock supplied from the high rate clock generator (16) and a low rate clock supplied from the low rate clock generator (15), for controlling the first and the second oscillators and a time measuring operation done by the time measuring section (11);
   the instrument being **characterized in that** it further comprises
   an auxiliary clock generator (19) whose clock works at a higher rate than the high rate clock,

   wherein

   the auxiliary clock generator (19) supplies an auxiliary clock only at a part of the time measuring operation done by the time measuring section (11),
   the travel time (Tx) is obtained by <u>using both</u> a first travel time (Ty) measured using the high rate clock <u>and</u> a second travel time (Tz) measured using the auxiliary clock,
   the auxiliary clock generator (19) supplies the auxiliary clock when the second oscillator receives the ultrasonic signal transmitted from the first oscillator and stops the auxiliary clock when the first time (Ty) is measured, and when the time measuring section (11) finishes the time measuring operation, the clock control section (18) stops a high rate clock supplied from the high rate clock generator (16).

2. The flow measuring instrument of fluid as defined in claim 1,
   wherein the low rate clock generator supplies a low rate cock having a relative time accuracy higher than that of the high rate clock,
   wherein the measurement control section includes:

   the time measuring section for measuring a travel time based on the high rate clock;
   a verification section for finding an oscillating cycle of the high rate clock based on an oscillating cycle of the low rate clock; and
   a correction section for correcting the travel time found by the time measuring section based on the oscillating cycle of the high rate clock, which has been found by the verification section.

3. The flow measuring instrument of fluid as defined in claim 2,
   wherein the auxiliary clock generator supplies the auxiliary clock only at a part of verifying operation done by the verification section, which finds the oscillating cycle of the high rate clock based on both of the oscillating cycle of the low rate clock and an oscillating cycle of the auxiliary clock.

4. The flow measuring instrument of fluid as defined in claim 3,
   wherein the time measuring section uses an auxiliary clock identical to that used by the verification section.

5. The flow measuring instrument of fluid as defined in claim 3,
   wherein the verification section finds the oscillating cycle of the auxiliary clock based on the oscillating cycle of the high rate clock.

6. The flow measuring instrument of fluid as defined in claim 3,
   wherein the verification section finds the oscillating cycle of the auxiliary clock based on the oscillating cycle of the low rate clock.

7. The flow measuring instrument of fluid as defined in any one of claim 1, 3, 4, 5, and 6,

wherein the high rate clock generator is formed of any one of a ceramic oscillation circuit, a CR oscillation circuit, and an LC oscillation circuit, which those circuits have a high speed rising time.

8. The flow measuring instrument of fluid as defined in any one of claim 1, 3, 4, 5, and 6,
   wherein the low rate clock generator is formed of a quartz oscillation circuit.

9. The flow measuring instrument of fluid as defined in any one of claim 3,
   wherein the auxiliary clock generator is formed of a ring oscillator.

10. The flow measuring instrument of fluid as defined in any one of claim 2 and 3,
    wherein the verification section verifies the high rate clock in parallel with the operation of the time measuring section.

11. The flow measuring instrument of fluid as defined in any one of claim 5 and 6,
    wherein the verification section verifies the auxiliary clock in parallel with the operation of the time measuring section.

12. The flow measuring instrument of fluid as defined in any one of claim 2 and 3.
    wherein when the oscillating cycle of the high rate clock, which has been found by the verification section, deviates from a predetermined range, a predetermined standard value is used as a verified value.

13. The flow measuring instrument of fluid as defined in any one of claim 5 and 6,
    wherein when the oscillating cycle of the auxiliary clock, which has been found by the verification section, deviates from a predetermined range, a predetermined standard value is used as a verified value.

14. The flow measuring instrument of fluid as defined in any one of claim 2 and 3 further comprising a notice section,
    wherein when the oscillating cycle of the high rate clock, which has been found by the verification section, deviates from a predetermined range, the notice section notifies an outside.

15. The flow measuring instrument of fluid as defined in any one of claim 5 and 6 further comprising a notice section,
    wherein when the oscillating cycle of the auxiliary clock, which has been found by the verification section, deviates from a predetermined range, the notice section notifies an outside.

16. The flow measuring instrument of fluid as defined in any one of claim 2 and 3 further comprising a shut-off section,
    wherein when the oscillating cycle of the high rate clock, which has been found by the verification section, deviates from a predetermined range, the shut-off section shuts off a flow of the fluid.

17. The flow measuring instrument of fluid as defined in any one of claim 5 and 6 further comprising a shut-off section,
    wherein when the oscillating cycle of the auxiliary clock, which has been found by the verification section, deviates from a predetermined range, the shut-off section shuts off a flow of the fluid.

**Patentansprüche**

1. Gerät zum Messen des Durchflusses einer Flüssigkeit, aufweisend:

   einen ersten Oszillator (2), der an einem Fluidkanal (1) zum Übertragen eines Ultraschallsignals angeordnet ist;
   einen zweiten Oszillator (3), zum Empfangen des vom ersten Oszillator übertragenen Ultraschallsignals;
   einen Zeitmessabschnitt (11), zum Ermitteln einer Laufzeit einer Ultraschallwelle durch Ausführen eines Laufs der mehrerer Läufe in Folge der Ultraschallwelle zwischen den ersten und zweiten Oszillatoren (2, 3);
   einen Berechnungsabschnitt (14) zum Ermitteln einer Durchflussgeschwindigkeit oder eines Durchflussvolumens anhand der vom Zeitmessabschnitt (11) gemessenen Laufzeit;
   ein Hochfrequenztaktgeber (16), der mit hoher Frequenz arbeitet;
   ein Niederfrequenztaktgeber (15), der mit niedriger Frequenz arbeitet;
   ein Taktsteuerabschnitt (18), zum Steuern eines Vorgangs des Hochfrequenztaktgebers;
   einen Messsteuerabschnitt (4), der auf Basis einer vom Hochfrequenztaktgeber (16) bereitgestellten hohen Taktfrequenz und eines vom Niederfrequenztaktgeber (15) bereitgestellten niedrigen Taktfrequenz wirkt zur Steuerung der ersten und zweiten Oszillatoren und eines vom Zeitmessabschnitt (11) durchgeführten Zeitmessvorgangs;
   wobei das Gerät **dadurch gekennzeichnet ist, dass** es ferner Folgendes aufweist:

einen Hilfstaktgeber (19), dessen Taktgeberfunktion mit einer höheren Frequenz arbeitet als der Hochfrequenztaktgeber,

wobei

der Hilfstaktgeber (19) einen Hilfstakt nur bei einem Teil des vom Zeitmessabschnitt (11) durchgeführten Zeitmessvorgangs bereitstellt;
die Laufzeit (Tx) durch Anwenden sowohl einer ersten, durch Anwenden des Hochfrequenztaktgebers gemessenen Laufzeit (Ty) als auch einer zweiten, durch Anwenden des Hilfstaktgebers gemessenen Laufzeit (Tz) erhalten wird,
der Hilfstaktgeber (19) den Hilfstakt bereitstellt, wenn der zweite Oszillator das vom ersten Oszillator übertragene Ultraschallsignal empfängt, und den Hilfstaktgeber abschaltet, wenn die erste Zeit (Ty) gemessen ist, und
wenn der Zeitmessabschnitt (11) den Zeitmessvorgang beendet, unterbricht der Taktsteuerabschnitt (18) einen vom Hochfrequenztaktgeber (16) bereitgestellten Hochfrequenztakt.

2. Gerät zum Messen des Durchflusses einer Flüssigkeit nach Anspruch 1,
wobei der Niederfrequenztaktgeber einen Niederfrequenztakt bereitstellt, dessen relative Zeitgenauigkeit höher ist als die des Hochfrequenztaktgebers,
wobei der Messsteuerabschnitt Folgendes aufweist:

den Zeitmessabschnitt zum Messen einer Laufzeit auf Basis des Hochfrequenztaktgebers;
einen Verifikationsabschnitt zum Ermitteln eines Oszillationszyklus des Hochfrequenztakts auf Basis eines Oszillationszyklus des Niederfrequenztakts; und
einen Korrekturabschnitt zum Korrigieren der Laufzeit, die vom Zeitmessabschnitt auf Basis des Oszillationszyklus des vom Verifikationsabschnitt festgestellten Hochfrequenztakts ermittelt worden ist.

3. Gerät zum Messen des Durchflusses einer Flüssigkeit nach Anspruch 2,
wobei der Hilfstaktgeber den Hilfstakt nur bei einem Teil des vom Verifikationsabschnitt durchgeführten Verifikationsvorgangs bereitstellt, der den Oszillationszyklus des Hochfrequenztakts auf Basis sowohl des Oszillationszyklus des Niederfrequenztakts als auch eines Oszillationszyklus des Hilfstakts ermittelt.

4. Gerät zum Messen des Durchflusses einer Flüssigkeit nach Anspruch 3,
wobei der Zeitmessabschnitt einen Hilfstakt benutzt, der identisch mit dem im Verifikationsabschnitt benutzten ist.

5. Gerät zum Messen des Durchflusses einer Flüssigkeit nach Anspruch 3,
wobei der Verifikationsabschnitt den Oszillationszyklus des Hilfstakts auf Basis des Oszillationszyklus des Hochfrequenztakts findet.

6. Gerät zum Messen des Durchflusses einer Flüssigkeit nach Anspruch 3,
wobei der Verifikationsabschnitt den Oszillationszyklus des Hilfstakts auf Basis des Oszillationszyklus des Niederfrequenztakts findet.

7. Gerät zum Messen des Durchflusses einer Flüssigkeit nach einem der Ansprüche 1, 3, 4, 5 und 6,
wobei der Hochfrequenztaktgeber von einem von keramischem Schwingkreis, CR-Schwingkreis und einem LC-Schwingkreis gebildet wird, wobei diese Schaltungen eine Hochgeschwindigkeits-Anstiegszeit haben.

8. Gerät zum Messen des Durchflusses einer Flüssigkeit nach einem der Ansprüche 1, 3, 4, 5 und 6,
wobei der Niederfrequenztaktgeber von einer Quarzoszillatorschaltung gebildet wird.

9. Gerät zum Messen des Durchflusses einer Flüssigkeit nach Anspruch 3,
wobei der Hilfsfrequenztaktgeber von einem Ringoszillator gebildet wird.

10. Gerät zum Messen des Durchflusses einer Flüssigkeit nach einem der Ansprüche 2 und 3,
wobei der Verifikationsabschnitt den Hochfrequenztakt parallel mit dem Vorgang des Zeitmessabschnitts verifiziert.

11. Gerät zum Messen des Durchflusses einer Flüssigkeit nach einem der Ansprüche 5 und 6,
wobei der Verifikationsabschnitt den Hilfsfrequenztakt parallel mit dem Vorgang des Zeitmessabschnitts verifiziert.

**12.** Gerät zum Messen des Durchflusses einer Flüssigkeit nach einem der Ansprüche 2 und 3, wobei, wenn der vom Verifikationsabschnitt gefundene Oszillationszyklus des Hochfrequenztakts von einem im Voraus bestimmten Bereich abweicht, ein im Voraus bestimmter Standardwert als ein verifizierter Wert benutzt wird.

**13.** Gerät zum Messen des Durchflusses einer Flüssigkeit nach einem der Ansprüche 5 und 6, wobei, wenn der vom Verifikationsabschnitt gefundene Oszillationszyklus des Hilfsfrequenztakts von einem im Voraus bestimmten Bereich abweicht, ein im Voraus bestimmter Standardwert als ein verifizierter Wert benutzt wird.

**14.** Gerät zum Messen des Durchflusses einer Flüssigkeit nach einem der Ansprüche 2 und 3, ferner aufweisend einen Hinweis-Abschnitt, wobei, wenn der vom Verifikationsabschnitt gefundene Oszillationszyklus des Hochfrequenztakts von einem im Voraus bestimmten Bereich abweicht, der Hinweis-Abschnitt einen Hinweis nach außen gibt.

**15.** Gerät zum Messen des Durchflusses einer Flüssigkeit nach einem der Ansprüche 5 und 6, ferner aufweisend einen Hinweis-Abschnitt, wobei, wenn der vom Verifikationsabschnitt gefundene Oszillationszyklus des Hilfsfrequenztakts von einem im Voraus bestimmten Bereich abweicht, der Hinweis-Abschnitt einen Hinweis nach außen gibt.

**16.** Gerät zum Messen des Durchflusses einer Flüssigkeit nach einem der Ansprüche 2 und 3, ferner aufweisend einen Absperr-Abschnitt, wobei, wenn der vom Verifikationsabschnitt gefundene Oszillationszyklus des Hochfrequenztakts von einem im Voraus bestimmten Bereich abweicht, der Absperr-Abschnitt einen Durchfluss des Fluids absperrt.

**17.** Gerät zum Messen des Durchflusses einer Flüssigkeit nach einem der Ansprüche 5 und 6, ferner aufweisend einen Absperr-Abschnitt, wobei, wenn der vom Verifikationsabschnitt gefundene Oszillationszyklus des Hilfsfrequenztakts von einem im Voraus bestimmten Bereich abweicht, der Absperr-Abschnitt einen Durchfluss des Fluids absperrt.

**Revendications**

**1.** Instrument de mesure de débit de fluide, l'instrument comprenant :

un premier oscillateur (2) disposé au niveau d'un conduit de fluide (1) pour transmettre un signal ultrasonore ;
un deuxième oscillateur (3) pour recevoir le signal ultrasonore transmis par le premier oscillateur ;
une section de mesure de temps (11) pour trouver un temps de déplacement d'une onde ultrasonore alors que l'onde ultrasonore effectue un déplacement ou une pluralité de déplacements en série entre les premier et deuxième oscillateurs (2, 3) ;
une section de calcul (14) pour trouver une vitesse d'écoulement ou un volume d'écoulement sur la base du temps de déplacement mesuré par la section de mesure de temps (11) ;
un générateur d'horloge à fréquence élevée (16) fonctionnant à une fréquence élevée ;
un générateur d'horloge à faible fréquence (15) fonctionnant à une faible fréquence ;
une section de commande d'horloge (18) pour commander un fonctionnement d'une horloge à fréquence élevée ;
une section de commande de mesure (4), fonctionnant sur la base d'une horloge à fréquence élevée délivrée par le générateur d'horloge à fréquence élevée (16) et d'une horloge à faible fréquence délivrée par le générateur d'horloge à faible fréquence (15), pour commander les premier et deuxième oscillateurs et une opération de mesure de temps effectuée par la section de mesure de temps (11) ;
l'instrument étant **caractérisé en ce qu'**il comprend en outre :

un générateur d'horloge auxiliaire (19) dont l'horloge fonctionne à une fréquence plus élevée que l'horloge à fréquence élevée,

dans lequel

le générateur d'horloge auxiliaire (19) délivre une horloge auxiliaire uniquement dans une partie de l'opération de mesure de temps effectuée par la section de mesure de temps (11),
le temps de déplacement (Tx) est obtenu en utilisant à la fois un premier temps de déplacement (Ty) mesuré en utilisant l'horloge à fréquence élevée et un deuxième temps de déplacement (Tz) mesuré en utilisant l'horloge auxiliaire,

le générateur d'horloge auxiliaire (19) délivre l'horloge auxiliaire lorsque le deuxième oscillateur reçoit le signal ultrasonore transmis par le premier oscillateur et arrête l'horloge auxiliaire lorsque le premier temps (Ty) est mesuré, et

lorsque la section de mesure de temps (11) termine l'opération de mesure de temps, la section de commande d'horloge (18) arrête une horloge à fréquence élevée délivrée par le générateur d'horloge à fréquence élevée (16).

2. Instrument de mesure de débit de fluide selon la revendication 1,
dans lequel le générateur d'horloge à faible fréquence délivre une horloge à faible fréquence ayant une précision de temps relative supérieure à celle de l'horloge à fréquence élevée,
dans lequel la section de commande de mesure comprend :

la section de mesure de temps pour mesurer un temps de déplacement sur la base de l'horloge à fréquence élevée ;
une section de vérification pour trouver un cycle d'oscillation de l'horloge à fréquence élevée sur la base d'un cycle d'oscillation de l'horloge à faible fréquence ; et
une section de correction pour corriger le temps de déplacement trouvé par la section de mesure de temps sur la base du cycle d'oscillation de l'horloge à fréquence élevée, qui a été trouvé par la section de vérification.

3. Instrument de mesure de débit de fluide selon la revendication 2,
dans lequel le générateur d'horloge auxiliaire délivre l'horloge auxiliaire uniquement dans une partie de l'opération de vérification effectuée par la section de vérification, qui trouve le cycle d'oscillation de l'horloge à fréquence élevée sur la base de à la fois du cycle d'oscillation de l'horloge à faible fréquence et d'un cycle d'oscillation de l'horloge auxiliaire.

4. Instrument de mesure de débit de fluide selon la revendication 3,
dans lequel la section de mesure de temps utilise une horloge auxiliaire identique à celle utilisée par la section de vérification.

5. Instrument de mesure de débit de fluide selon la revendication 3,
dans lequel la section de vérification trouve le cycle d'oscillation de l'horloge auxiliaire sur la base du cycle d'oscillation de l'horloge à fréquence élevée.

6. Instrument de mesure de débit de fluide selon la revendication 3,
dans lequel la section de vérification trouve le cycle d'oscillation de l'horloge auxiliaire sur la base du cycle d'oscillation de l'horloge à faible fréquence.

7. Instrument de mesure de débit de fluide selon l'une quelconque des revendications 1, 3, 4, 5 et 6,
dans lequel le générateur d'horloge à fréquence élevée est constitué de l'un quelconque d'un circuit oscillant en céramique, d'un circuit oscillant RC et d'un circuit oscillant LC, ces circuits ayant un temps de montée à grande vitesse.

8. Instrument de mesure de débit de fluide selon l'une quelconque des revendications 1, 3, 4, 5 et 6,
dans lequel le générateur d'horloge à faible fréquence est constitué d'un circuit oscillant à quartz.

9. Instrument de mesure de débit de fluide selon la revendication 3,
dans lequel le générateur d'horloge auxiliaire est constitué d'un oscillateur en anneau.

10. Instrument de mesure de débit de fluide selon l'une quelconque des revendications 2 et 3,
dans lequel la section de vérification vérifie l'horloge à fréquence élevée en parallèle avec le fonctionnement de la section de mesure de temps.

11. Instrument de mesure de débit de fluide selon l'une quelconque des revendications 5 et 6,
dans lequel la section de vérification vérifie l'horloge auxiliaire en parallèle avec le fonctionnement de la section de mesure de temps.

12. Instrument de mesure de débit de fluide selon l'une quelconque des revendications 2 et 3,
dans lequel, lorsque le cycle d'oscillation de l'horloge à fréquence élevée, qui a été trouvé par la section de vérification, s'écarte d'une plage prédéterminée, une valeur standard prédéterminée est utilisée en tant que valeur vérifiée.

13. Instrument de mesure de débit de fluide selon l'une quelconque des revendications 5 et 6, dans lequel, lorsque le cycle d'oscillation de l'horloge auxiliaire, qui a été trouvé par la section de vérification, s'écarte d'une plage prédéterminée, une valeur standard prédéterminée est utilisée en tant que valeur vérifiée.

14. Instrument de mesure de débit de fluide selon l'une quelconque des revendications 2 et 3, comprenant en outre une section de notification, dans lequel, lorsque le cycle d'oscillation de l'horloge à fréquence élevée, qui a été trouvé par la section de vérification, s'écarte d'une plage prédéterminée, la section de notification le notifie à l'extérieur.

15. Instrument de mesure de débit de fluide selon l'une quelconque des revendications 5 et 6, comprenant en outre une section de notification, dans lequel, lorsque le cycle d'oscillation de l'horloge auxiliaire, qui a été trouvé par la section de vérification, s'écarte d'une plage prédéterminée, la section de notification le notifie à l'extérieur.

16. Instrument de mesure de débit de fluide selon l'une quelconque des revendications 2 et 3, comprenant en outre une section de coupure, dans lequel, lorsque le cycle d'oscillation de l'horloge à fréquence élevée, qui a été trouvé par la section de vérification, s'écarte d'une plage prédéterminée, la section de coupure coupe un écoulement du fluide.

17. Instrument de mesure de débit de fluide selon l'une quelconque des revendications 5 et 6, comprenant en outre une section de coupure, dans lequel, lorsque le cycle d'oscillation de l'horloge auxiliaire, qui a été trouvé par la section de vérification, s'écarte d'une plage prédéterminée, la section de coupure coupe un écoulement du fluide.

FIG. 1

# FIG. 2

EP 1 921 424 B1

# FIG. 3

Transmission waveform

Reception waveform

$T_a$

High rate clock

Low rate clock

$\tau_1$  $\tau_2$  $\tau_3$

Time

EP 1 921 424 B1

# FIG. 4

Transmission waveform

Reception waveform

$T_x$

High rate clock

$T_y$

Auxiliary clock

$T_z$

$\tau_1$ $\tau_2$

Time

# FIG. 5

Low rate clock

$T_1$

High rate clock

$N \times T_2$

$T_2$

Auxiliary clock

$X \times T_3$

$Y \times T_3$

$\tau_a$ $\tau_b$

Time

$\tau_c$ $\tau_d$

EP 1 921 424 B1

# FIG. 6

High rate clock

$T_2$

Auxiliary clock

$T_3$

$\tau_a$      $\tau_b$

Time

FIG. 7

# FIG. 8

Ring oscillator — 19

Ceramic oscillation circuit — 16

Clock control section — 18

Cycle setting section — 17

Quartz oscillation circuit — 15

Transmission section — 6

Switchover section — 8

Amplification section — 7

Comparison section — 9

Repetition section — 10

Time measuring section — 11

Correction section — 13

Verification section — 12

Calculation section — 14

Valve driving section — 22

Abnormality determining section — 20

5

4

1

2

3

23

EP 1 921 424 B1

# FIG. 9

# FIG. 10

A first set of measurement

Flow speed

$\tau_{a1}$  $\tau_{b1}$  $\tau_{a2}$  $\tau_{b2}$  $\tau_{a3}$  $\tau_{b3}$  $\tau_{a4}$  $\tau_{b4}$

Time

**EP 1 921 424 B1**

**REFERENCES CITED IN THE DESCRIPTION**

**Patent documents cited in the description**

- JP 2003028685 A
- US 5178018 A
- US 20040261539 A1
- JP H09304139 B